(19) Europäisches Patentamt / European Patent Office / Office européen des brevets

(11) **EP 3 217 578 B1**

(12) **EUROPEAN PATENT SPECIFICATION**

(45) Date of publication and mention of the grant of the patent:
**18.03.2020   Bulletin 2020/12**

(51) Int Cl.:
**H04B 17/391** *(2015.01)*     **H04L 25/02** *(2006.01)*

(21) Application number: **16202619.9**

(22) Date of filing: **07.12.2016**

(54) **CHANNEL SOUNDING TESTING DEVICE AND METHOD TO ESTIMATE LARGE-SCALE PARAMETERS FOR CHANNEL MODELLING**

KANALMESSUNGS-TESTVORRICHTUNG UND VERFAHREN ZUR SCHÄTZUNG GROSSFLÄCHIGER PARAMETER ZUR KANALMODELLIERUNG

DISPOSITIF D'ESSAI DE SONDAGE DE CANAL ET PROCÉDÉ POUR ESTIMER DES PARAMÈTRES DE MODÉLISATION DE CANAL À GRANDE ÉCHELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **08.03.2016   US 201662305493 P**
   **02.09.2016   US 201615256074**

(43) Date of publication of application:
**13.09.2017   Bulletin 2017/37**

(73) Proprietor: **Rohde & Schwarz GmbH & Co. KG 81671 München (DE)**

(72) Inventors:
• **Köbele, Johannes**
  **80639 München (DE)**
• **Kulessa, Andreas**
  **60486 Frankfurt am Main (DE)**

(74) Representative: **Körfer, Thomas Mitscherlich PartmbB Patent- und Rechtsanwälte Sonnenstrasse 33 80331 München (DE)**

(56) References cited:
• ALEXANDER PAIER ET AL: "Characterization of Vehicle-to-Vehicle Radio Channels from Measurements at 5.2?GHz", WIRELESS PERSONAL COMMUNICATIONS., vol. 50, no. 1, 26 June 2008 (2008-06-26), pages 19-32, XP055380733, NL ISSN: 0929-6212, DOI: 10.1007/s11277-008-9546-6

• Z Bodnilr ET AL: "Noise threshold dependency of the RMS delay spread in wideband measurements of radio propagation channels", Telecommunications Symposium, 1998. ITS '98 Proceedings. SBT/IEEE Inte rnational Sao Paulo, Brazil 9-13 Aug. 1998, 9 August 1998 (1998-08-09), XP055380837, US DOI: 10.1109/ITS.1998.713138 ISBN: 978-0-7803-5030-4 Retrieved from the Internet: URL:http://ieeexplore.ieee.org/ielx4/5791/15454/00713138.pdf [retrieved on 2017-06-13]

• J.-P. ROSSI: "Influence of measurement conditions on the evaluation of some radio channel parameters", IEEE TRANSACTIONS ON VEHICULAR TECHNOLOGY., vol. 48, no. 4, 1 July 1999 (1999-07-01), pages 1304-1316, XP055380729, US ISSN: 0018-9545, DOI: 10.1109/25.775378

• "The Ultra-Wide Bandwidth Indoor Channel: from Statistical Model to Simulations ; 02284r0P802-15_SG3a-The-Ultra-Wide-Bandwidth-Indoor-Channel-from-Statistical-Model-to-Simulations", IEEE DRAFT; 02284R0P802-15_SG3A-THE-ULTRA-WIDE-BANDWID TH-INDOOR-CHANNEL-FROM-STATISTICAL-M ODEL-T O-SIMULATIONS, IEEE-SA, PISCATAWAY, NJ USA, vol. 802.15, 6 July 2002 (2002-07-06), pages 1-27, XP017621528, [retrieved on 2002-07-06]

**Description**

TECHNICAL FIELD

The invention concerns a channel sounding testing device and a method with comparability of channel measurements to estimate large-scale parameters for channel modelling.

BACKGROUND ART

It was agreed that 3GPP would need to study performance and feasibility of using high frequency spectrum above 6 GHz for further evolution beyond LTE-Advanced and for technology advancement towards 5G. The aim is to develop a channel model to enable feasibility study and developing framework of using high frequency spectrum ranging from 6 GHz to 100 GHz.
Generally, different large-scale fading parameters can be used to describe and subsequently model a radio channel in different environments (e.g. indoor, UMi, UMa, etc.). Usually, these parameters are derived from extensive channel sounding campaigns or parameters used in channel models and are at least verified with representative channel measurements in different environments and dedicated frequency ranges.
For example, ALEXANDER PAIER ET AL: "Characterization of Vehicle-to-Vehicle Radio Channels from Measurements at 5.2 GHz", WIRELESS PERSONAL COMMUNICATIONS., vol. 50, no. 1, 26 June 2008 (2008-06-26), pages 19-32, XP055380733, NL., ISSN: 0929-6212, DOI: 10.1007/s11277-008-9546-6, discloses results on pathloss, power-delay profiles (PDPs), and delay-Doppler spectra from a high speed measurement campaign on a highway in Lund, Sweden. The measurements were performed at a carrier frequency of 5.2 GHz with the communicating vehicles traveling on the highway in opposite directions. A pathloss coefficient of 1.8 shows the best fit in the mean square sense with the measurement. The average root mean square (RMS) delay spread is between 263 ns and 376 ns, depending on the noise threshold. Selected paths in the delay-Doppler domain were further investigated and described, where Doppler shifts of more than 1,000 Hz where observed.
Furthermore, US 2011/0205911 A1 discloses a system and a method for channel sounding of broadband signal carrier mobile communications.
Disadvantageously, the above-mentioned patent document does not take under consideration that different channel sounding approaches (e.g. frequency or time domain) or even the use of different channel sounding equipment (VNA, signal generator, signal analyzer, amplifier, LNA, upconverter, downconverter, cabling, sounding sequence, etc.) will result in different dynamic ranges and thus also in different effective noise thresholds in the resulting measurement data.
Due to the fact that the estimation of the large scale fading parameters depends on the effective noise threshold of the underlying channel measurement, it is crucial to identify influencing measurement parameters and document these parameters along with the measurement results. This will later allow the comparison of large scale fading parameters derived from various channel measurement campaigns with different equipment in order to validate the channel model.
Consequently, it is an object to provide a channel sounding device and a method with comparability of channel measurements to estimate large-scale parameters for channel modelling.
The object is solved by the independent claims. The dependent claims comprise further developments.
Thus, in this application, the comparability issue of large scale fading parameters derived from channel measurements with two different noise thresholds is investigated by the example of the RMS delay spread.

SUMMARY OF THE INVENTION

According to a first aspect of the invention, a channel sounding testing device is provided. The channel sounding testing device uses channel models and scenario specific propagation parameters, which are verified by comparable channel measurements in representative environments.
According to the inventive implementation form of the first aspect, measurement parameters that affect the estimation of large scale parameters are documented along with the measurement results in order to ensure comparability. According to the inventive implementation form of the first aspect, one large scale parameter is noise threshold.
According to the inventive implementation form of the first aspect, the noise threshold is defined according to the following equation

$$\mathrm{NoiseThreshold_{dB}} = \gamma + 20\log_{10}\sqrt{\tfrac{1}{\Delta L}\sum_{i=1+(1-\Delta)L}^{L}|\alpha_i|^2}\,,$$

wherein $\gamma$ is a margin,
wherein $|\alpha_i|$ is the amplitude of an i-th sample of the channel input response, amplitude of the sample of the channel input response,
wherein $L_i$ is the length of a channel impulse response,
and wherein $\Delta$ is a parameter.

According to a first preferred implementation form of the first aspect, the parameter $\Delta$ is from the following interval $\frac{1}{L} \leq \Delta \leq 1,$ *where $\Delta$ is in steps of* $\frac{1}{L}$.

According to a second preferred implementation form of the first aspect, the channel impulse response h(t) is defined by

$$h(t) = \sum_{i=1}^{L} \alpha_i(t) \cdot \delta(t - \tau_i),$$

wherein $\tau_i$ is the delay of the i-th sample.

According to a further preferred implementation form of the first aspect, for all measurements the effective noise threshold as well as the used parameters in the equation to estimate this noise threshold are documented in order to achieve comparability of the derived large scale parameters.

According to a second aspect of the invention, a method of a channel sounding testing device is provided. The method uses channel models and scenario specific propagation parameters, which are verified by comparable channel measurements in representative environments.

According to the inventive implementation form of the second aspect, measurement parameters that affect the estimation of large scale parameters are documented along with the measurement results in order to ensure comparability.

According to the inventive implementation of the second aspect, one large scale parameter is noise threshold.

According to the inventive implementation of the second aspect, the noise threshold is defined according to the following equation

$$\text{NoiseThreshold}_{\text{dB}} = \gamma + 20 \log_{10} \sqrt{\frac{1}{\Delta L} \sum_{i=1+(1-\Delta)L}^{L} |\alpha_i|^2},$$

wherein $\gamma$ is a margin,
wherein $|\alpha_i|$ is the amplitude of an i-th sample of the channel input response, amplitude of the sample of the channel input response,
wherein $L_i$ is the length of a channel impulse response,
and wherein $\Delta$ is a parameter.

According to a first preferred implementation of the second aspect, the parameter $\Delta$ is from the following interval $\frac{1}{L} \leq \Delta \leq 1,$ *where $\Delta$ is in steps of* $\frac{1}{L}$.

According to a second preferred implementation of the second aspect, the channel impulse response h(t) is defined by

$$h(t) = \sum_{i=1}^{L} \alpha_i(t) \cdot \delta(t - \tau_i),$$

wherein $\tau_i$ is the delay of the i-the sample.

According to a further preferred implementation of the second aspect, for all measurements the effective noise threshold as well as the used parameters in the equation to estimate this noise threshold are documented in order to achieve comparability of the derived large scale parameters.

According to a third aspect of the invention, a computer program with program code means for performing all steps according to the second aspect, if the program is executed on a computer device or digital signal processor of a channel sounding device, is provided.

BRIEF DESCRIPTION OF THE DRAWINGS

In the figures of the drawings, embodiments are shown by way of example only, wherein

Fig. 1    shows an exemplary channel measurement and the estimated large scale parameters (mean excess delay, RMS delay spread, and maximum excess delay);

Fig. 2    shows the same measurement with a slightly higher noise threshold of -94 dBm;

Fig. 3    shows an exemplary measurement setup for applying the inventive channel sounding device;

Fig. 4    shows an exemplary channel impulse response resulting from the exemplary measurement setup of Fig. 3; and

Fig. 5    shows a flow chart of an embodiment of the second aspect of the invention.

DESCRIPTION OF PREFRRED EMBODIMENTS

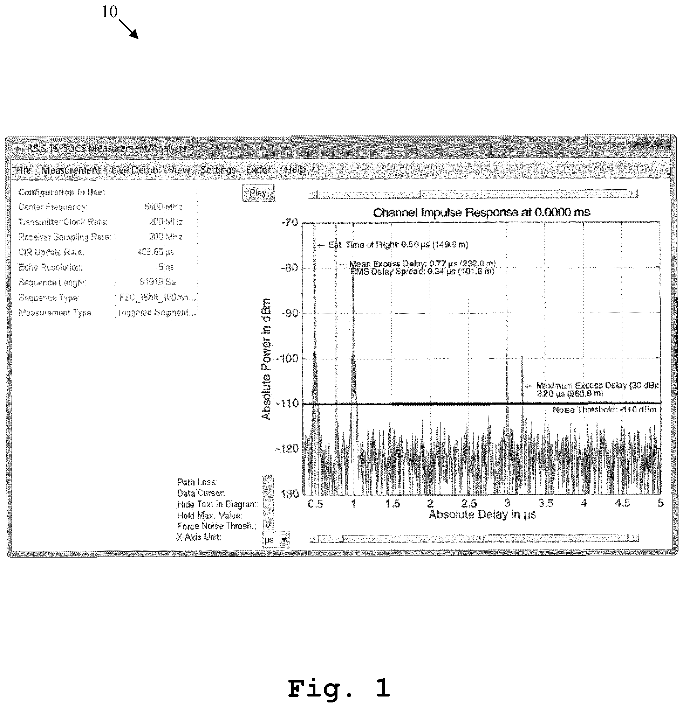

Fig. 1 is based on an assumed noise threshold of -110 dBm. The measurement scenario was artificially generated by means of a fading simulator with the fading profile depicted in Table 1 in order to achieve reproducibility.

**Table 1: Simulated Channel Impulse Response**

|                  | Path 1   | Path 2 | Path 3 | Path 4  |
|------------------|----------|--------|--------|---------|
| Path Loss        | 0 dB     | 0 dB   | 20 dB  | 20 dB   |
| Additional Delay | 0.5 μs   | 1 μs   | 3 μs   | 3.2 μs  |

Calculating the propagation parameters from the simulated channel impulse response according the following equations yields the following values for the mean excess delay $\overline{\tau}$, the second moment of the delay $\overline{\tau^2}$ and the RMS delay spread $\sigma_\tau$, respectively.

$$\overline{\tau} = \frac{\sum_k P(\tau_k) \cdot \tau_k}{\sum_k P(\tau_k)} = \frac{1 \cdot 0.5 \ \mu s + 1 \cdot 1 \ \mu s + 0.01 \cdot 3 \ \mu s + 0.01 \cdot 3,2 \ \mu s}{1 + 1 + 0.01 + 0.01} = \frac{1.56 \ \mu s}{2.02}$$
$$= 0.77 \ \mu s$$

$$\overline{\tau^2} = \frac{\sum_k P(\tau_k) \cdot \tau_k^2}{\sum_k P(\tau_k)} = \frac{1 \cdot (0.5 \ \mu s)^2 + 1 \cdot (1 \ \mu s)^2 + 0.01 \cdot (3 \ \mu s)^2 + 0.01 \cdot (3.2 \ \mu s)^2}{1 + 1 + 0.01 + 0.01}$$
$$= 0.71 \ (\mu s)^2$$

$$\sigma_\tau = \sqrt{\overline{\tau^2} - \overline{\tau}^2} = \sqrt{0.71 \ (\mu s)^2 - (0.77 \ \mu s)^2} = 0.34 \ \mu s \tag{1}$$

The estimated RMS delay spread from the channel measurement in Fig. 1 with the noise threshold of -110 dBm correlates very well with the expected results (in both cases RMS delay spread $\sigma_\tau$ = 0.34 μs).

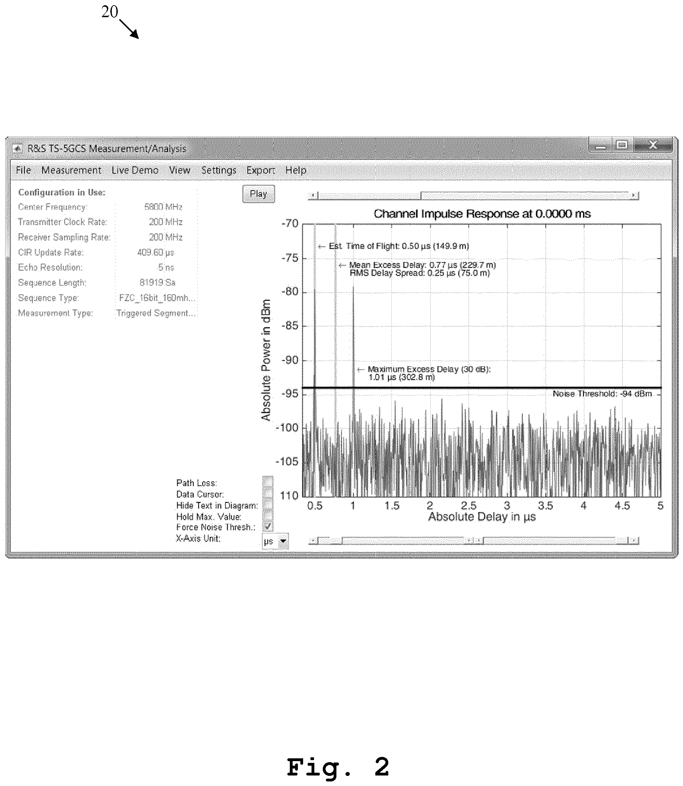

The reason for different noise thresholds in the measurement results in Fig. 2 can be the use of a different setup. Nevertheless, in our case the measurements were performed with exactly the same setup but additional noise was simulated inside the signal generator. The estimated RMS delay spread is reduced to $\sigma_\tau$ = 0.25 μs because some multipath components are now below the noise threshold of the measurement data.

This simple example shows the influence of the noise threshold on the RMS delay spread parameter estimation process.

In order to generate the estimated large scale fading parameters used for channel modelling comparable, relevant parameters like the effective noise threshold of the underlying channel measurements need to be set to a meaningful value and also need to be documented.

The preferred approach to estimate a meaningful noise threshold for a specific channel measurement automatically is to analyze the part of the channel impulse response where one can expect no additional multipath components. This is usually the case for the last part of the measured channel impulse response under the precondition that the relevant measurement parameters, e.g. the length of the recorded channel impulse response, are chosen according to the currently expected channel conditions.

The measured channel impulse response h(t) with the length $L$ can be described by h(t), where $\alpha_i$ is the complex amplitude at the delay $\tau_i$.

$$h(t) = \sum_{i=1}^{L} \alpha_i(t) \cdot \delta(t - \tau_i) \qquad (2)$$

A meaningful noise threshold can be estimated by calculating the root mean square value of the last part of the channel impulse response specified by the factor $\Delta$ ( $\frac{1}{L} \leq \Delta \leq 1$, where $\Delta$ is in steps of $\frac{1}{L}$ ) and subsequently adding a margin $\gamma$. This approach of noise threshold estimation can be described by the following parameterizable equation.

$$\text{NoiseThreshold}_{\text{dB}} = \gamma + 20 \log_{10} \sqrt{\frac{1}{\Delta L} \sum_{i=1+(1-\Delta)L}^{L} |\alpha_i|^2} \qquad (3)$$

Meaningful values for the fraction $\Delta$ of the channel impulse response that is used for noise threshold estimation and the margin $\gamma$ are as follows:

$\Delta \approx 0.1,$
$\gamma = 3\ dB.$

Independent of manually or automatically selecting the noise threshold, the value should always be documented along with the channel measurement and the derived channel model parameters.

In this application, the comparability issue of large scale fading parameters derived from channel measurements conducted with different channel sounding setups and therefore with different effective noise thresholds are addressed.

Additionally, an equation to estimate a meaningful noise threshold from the raw channel measurement data is provided. Since the estimated effective noise threshold of the underlying measurement data is affecting the estimation of large scale fading parameters (e.g. RMS delay spread), only a common understanding of this parameter and its documentation makes a comparison of parameters derived from different channel measurement campaigns possible.

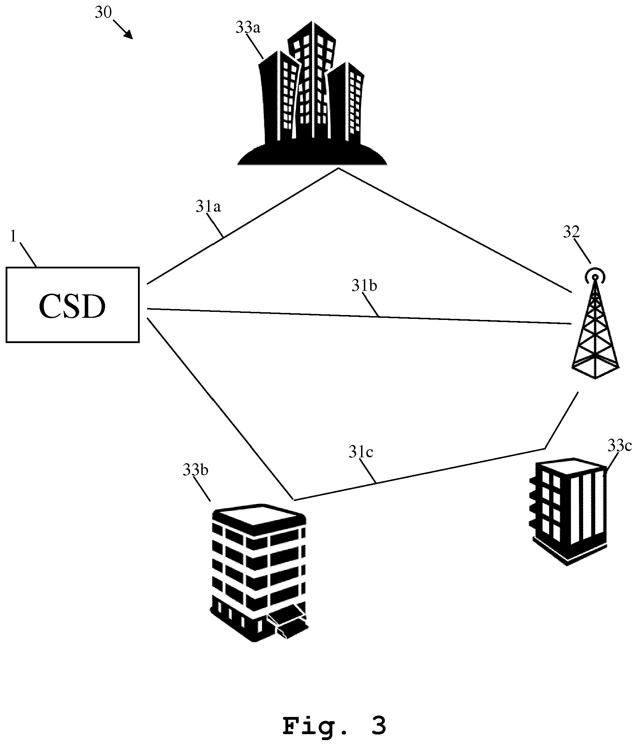

Now, with respect to Fig. 3, an exemplary measurement setup 30 for applying the inventive channel sounding device 1 is illustrated.

In this exemplary case, due to reflections of a signal transmitted by a base station 32 at obstacles such as buildings 33a, 33b, 33c, the transmitted signal takes different signal paths 31a, 31b, 31c from said base station 32 to the channel sounding device 1.

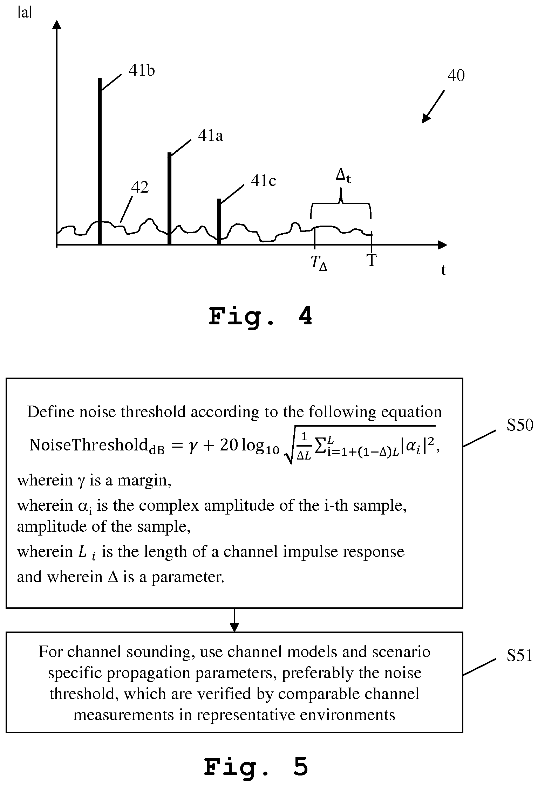

Consequently, due to their different length, these various signal paths 31a, 31b, 31c lead to the corresponding multipath components 41a, 41b, 41c appearing at the respective points of time in the channel impulse response shown in diagram 40 according to Fig. 4.

In addition to this, Fig. 4 also illustrates noise 42. Furthermore, it should be mentioned that the parameter $\Delta_t$ analogously corresponds to the above-mentioned parameter $\Delta$ and can be calculated as

$$\Delta_t = T - T_\Delta,$$

wherein $T$ ($>T_\Delta$) denotes the duration of the channel impulse response, respectively the recording duration, and $T_\Delta$ denotes an arbitrary point of time, after which only noise and no further multipath components occur.

Finally, Fig. 5 shows a flow chart of the inventive method. In a first step S50, noise threshold is defined according to the following equation

$$NoiseThreshold_{dB} = \gamma + 20 \log_{10} \sqrt{\frac{1}{\Delta L} \sum_{i=1+(1-\Delta)L}^{L} |\alpha_i|^2},$$

wherein $\gamma$ is a margin,
wherein $|\alpha_i|$ is the amplitude of an i-th sample of the channel impulse response, amplitude of the sample of the channel impulse response,
wherein $L_i$ is the length of a channel impulse response,
and wherein $\Delta$ is a parameter.

In a second step S51, for channel sounding, channel models and scenario specific propagation parameters, preferably the noise threshold, are used, which are verified by comparable channel measurements in representative environments.

While various embodiments of the present invention have been described above, it should be understood that they have been presented by way of example only, and not limitation.

**Claims**

1. A channel sounding testing device (1) configured to use channel models and scenario specific propagation parameters, which are verified by comparable channel measurements in representative environments, **characterized in that** the channel sounding device is further configured to document measurement parameters that affect the estimation of
large scale parameters along with the measurement results in order to ensure comparability, wherein one large scale parameter is noise threshold, wherein the noise threshold is defined according to the following equation

$$NoiseThreshold_{dB} = \gamma + 20 \log_{10} \sqrt{\frac{1}{\Delta L} \sum_{i=1+(1-\Delta)L}^{L} |\alpha_i|^2},$$

wherein $\gamma$ is a margin,
wherein $|\alpha_i|$ is the amplitude of an i-th sample of the channel impulse response, amplitude of the sample of the channel impulse response,
wherein L is the length of the channel impulse response,
wherein $\Delta$ is a parameter,
wherein $\Delta$ is from the following interval $\frac{1}{L} \le \Delta \le 1$, *where $\Delta$ is in steps of* $\frac{1}{L}$, and
wherein the margin $\gamma$ is 3 dB.

2. The channel sounding testing device (1) of claim 1, wherein channel impulse response $h(t)$ is defined by

$$h(t) = \sum_{i=1}^{L} \alpha_i(t) \cdot \delta(t - \tau_i),$$

wherein $\tau_i$ is the delay of the i-th sample.

3. The channel sounding testing device (1) of claim 1 or 2, further configured to document for all measurements the effective noise threshold as well as the used parameters in the equation to estimate this noise threshold in order to achieve comparability of the derived large scale parameters.

4. A method for a channel sounding testing device (1) using channel models and scenario specific propagation parameters, which are verified by comparable channel measurements in representative environments, **characterized in that**
measurement parameters that affect the estimation of large scale parameters are documented along with the measurement results in order to ensure comparability, wherein one large scale parameter is noise threshold, wherein the noise threshold is defined (S50) according to the following equation

$$NoiseThreshold_{dB} = \gamma + 20\,log_{10}\sqrt{\frac{1}{\Delta L}\sum_{i=1+(1-\Delta)L}^{L}|\alpha_i|^2},$$

wherein $\gamma$ is a margin,
wherein $|\alpha_i|$ is the amplitude of an i-th sample of the channel impulse response, amplitude of the sample of the channel impulse response,
wherein L is the length of the channel impulse response,
wherein $\Delta$ is a parameter,

wherein $\Delta$ is from the following interval $\frac{1}{L} \leq \Delta \leq 1,$ *where $\Delta$ is in steps of* $\frac{1}{L}$*,* and
wherein the margin $\gamma$ is 3 dB.

**5.** The method of claim 4,
wherein channel impulse response *h*(*t*) is defined by

$$h(t) = \sum_{i=1}^{L}\alpha_i(t)\cdot\delta(t-\tau_i),$$

wherein $\tau_i$ is the delay of the i-the sample.

**6.** The method of any of claim 4 or 5,
wherein for all measurements the effective noise threshold as well as the used parameters in the equation to estimate this noise threshold are documented in order to achieve comparability of the derived large scale parameters.

**7.** A computer program with program code means for performing the following steps on a computer device or a digital signal processor:

using channel models, and
using scenario specific propagation parameters, which are verified by comparable channel measurements in representative environments for channel sounding,
**characterized in that**
measurement parameters that affect the estimation of large scale parameters are documented along with the measurement results in order to ensure comparability,
wherein one large scale parameter is noise threshold,
wherein the noise threshold is defined according to the following equation

$$NoiseThreshold_{dB} = \gamma + 20\,log_{10}\sqrt{\frac{1}{\Delta L}\sum_{i=1+(1-\Delta)L}^{L}|\alpha_i|^2},$$

wherein $\gamma$ is a margin,
wherein $|\alpha_i|$ is the amplitude of an i-th sample of the channel impulse response, amplitude of the sample of the channel impulse response,
wherein L is the length of the channel impulse response,
wherein $\Delta$ is a parameter,

wherein $\Delta$ is from the following interval $\frac{1}{L} \leq \Delta \leq 1,$ *where $\Delta$ is in steps of* $\frac{1}{L}$*,* and
wherein the margin $\gamma$ is 3 dB.

**Patentansprüche**

**1.** Kanalmessungs-Testvorrichtung (1), die zur Verwendung von Kanalmodellen und szenariospezifischen Ausbreitungsparametern konfiguriert ist, welche durch vergleichbare Kanalmessungen in repräsentativen Umgebungen verifiziert werden,
**dadurch gekennzeichnet, dass**

die Kanalmessungsvorrichtung weiterhin dazu konfiguriert ist, Messparameter, welche die Schätzung großflächiger Parameter beeinflussen, zusammen mit den Messergebnissen zu dokumentieren, um eine Vergleichbarkeit sicherzustellen, wobei ein großflächiger Parameter Rauschschwelle ist, wobei die Rauschschwelle gemäß folgender Gleichung

$$\text{NoiseThreshold}_{dB} = \gamma + 20 \log_{10} \sqrt{\frac{1}{\Delta L} \sum_{i=1+(1-\Delta)L}^{L} |\alpha_i|^2},$$

definiert ist,

wobei $\gamma$ ein Spielraum ist,
wobei $|\alpha_i|$ die Amplitude einer i-ten Probe der Kanalimpulsantwort, Amplitude der Probe der Kanalimpulsantwort ist,
wobei L die Länge der Kanalimpulsantwort ist,
wobei $\Delta$ ein Parameter ist,
wobei $\Delta$ aus dem folgenden Intervall hervorgeht $\frac{1}{L} \leq \Delta \leq 1,$ *where $\Delta$ is in steps of* $\frac{1}{L}$*,* und
wobei der Spielraum $\gamma$ 3 dB beträgt.

2. Kanalmessungs-Testvorrichtung (1) nach Anspruch 1,
wobei die Kanalimpulsantwort h(t) durch

$$h(t) = \sum_{i=1}^{L} \alpha_i(t) \cdot \delta(t - \tau_i)$$

definiert ist,
wobei $\tau_i$ die Verzögerung der i-ten Probe darstellt.

3. Kanalmessungs-Testvorrichtung (1) nach Anspruch 1 oder 2,
weiterhin dazu konfiguriert, für alle Messungen die effektive Rauschschwelle sowie die verwendeten Parameter in der Gleichung zum Schätzen dieser Rauschschwelle zu dokumentieren, um eine Vergleichbarkeit der abgeleiteten großflächigen Parameter zu erzielen.

4. Verfahren für eine Kanalmessungs-Testvorrichtung (1), welches Kanalmodelle und szenariospezifische Ausbreitungsparameter verwendet, welche durch vergleichbare Kanalmessungen in repräsentativen Umgebungen verifiziert werden,
**dadurch gekennzeichnet, dass**
Messparameter, welche die Schätzung großflächiger Parameter beeinflussen, zusammen mit den Messergebnissen dokumentiert werden, um eine Vergleichbarkeit sicherzustellen, wobei ein großflächiger Parameter Rauschschwelle ist, wobei die Rauschschwelle gemäß folgender Gleichung

$$\text{NoiseThreshold}_{dB} = \gamma + 20 \log_{10} \sqrt{\frac{1}{\Delta L} \sum_{i=1+(1-\Delta)L}^{L} |\alpha_i|^2},$$

definiert ist (S50),

wobei $\gamma$ ein Spielraum ist,
wobei $|\alpha_i|$ die Amplitude einer i-ten Probe der Kanalimpulsantwort, Amplitude der Probe der Kanalimpulsantwort ist,
wobei L die Länge der Kanalimpulsantwort ist,
wobei $\Delta$ ein Parameter ist,
wobei $\Delta$ aus dem folgenden Intervall $\frac{1}{L} \leq \Delta \leq 1,$ *where $\Delta$ is in steps of* $\frac{1}{L}$ hervorgeht, und
wobei der Spielraum $\gamma$ 3 dB beträgt.

**5.** Verfahren nach Anspruch 4,
wobei die Kanalimpulsantwort h(t) durch

$$h(t) = \sum_{i=1}^{L} \alpha_i(t) \cdot \delta(t - \tau_i)$$

definiert ist, wobei $\tau_i$ die Verzögerung der i-ten Probe darstellt.

**6.** Verfahren nach einem der Ansprüche 4 oder 5,
wobei für alle Messungen die effektive Rauschschwelle sowie die verwendeten Parameter in der Gleichung zum Schätzen dieser Rauschschwelle dokumentiert werden, um eine Vergleichbarkeit der abgeleiteten großflächigen Parameter zu erzielen.

**7.** Computerprogramm mit Programmcodeeinrichtungen zur Durchführung der folgenden Schritte auf einem Computer oder einem digitalen Signalprozessor:

Verwenden von Kanalmodellen, und
Verwenden von szenariospezifischen Ausbreitungsparametern, welche durch vergleichbare Kanalmessungen in repräsentativen Umgebungen zur Kanalmessung verifiziert werden,
**dadurch gekennzeichnet, dass**
Messparameter, welche die Schätzung von großflächigen Parametern beeinflussen, zusammen mit den Messergebnissen dokumentiert werden, um eine Vergleichbarkeit sicherzustellen, wobei ein großflächiger Parameter Rauschschwelle ist, wobei die Rauschschwelle gemäß folgender Gleichung

$$\text{NoiseThreshold}_{\text{dB}} = \gamma + 20 \log_{10} \sqrt{\frac{1}{\Delta L} \sum_{i=1+(1-\Delta)L}^{L} |\alpha_i|^2},$$

definiert ist,

wobei $\gamma$ ein Spielraum ist,
wobei $|\alpha_i|$ die Amplitude einer i-ten Probe der Kanalimpulsantwort, Amplitude der Probe der Kanalimpulsantwort ist,
wobei L die Länge der Kanalimpulsantwort ist,
wobei $\Delta$ ein Parameter ist,
wobei $\Delta$ aus dem folgenden Intervall $\frac{1}{L} \leq \Delta \leq 1,$ *where $\Delta$ is in steps of* $\frac{1}{L}$ hervorgeht, und
wobei der Spielraum $\gamma$ 3 dB beträgt.

**Revendications**

**1.** Dispositif de test de sondage de canaux (1) configuré pour utiliser des modèles de canaux et des paramètres de propagation spécifiques à un scénario, qui sont vérifiés par des mesures de canaux comparables dans des environnements représentatifs,
**caractérisé en ce que**
le dispositif de sondage de canal est en outre configuré pour documenter des paramètres de mesure qui affectent l'estimation de paramètres à grande échelle ainsi que les résultats de mesure afin d'assurer la comparabilité, dans lequel un paramètre à grande échelle est un seuil de bruit, dans lequel le seuil de bruit est défini d'après l'équation suivante :

$$NoiseThreshold_{dB} = \gamma + 20 \log_{10} \sqrt{\frac{1}{\Delta L} \sum_{i=1+(1-\Delta)L}^{L} |\alpha_i|^2},$$

dans laquelle $\gamma$ est une marge,
dans laquelle $|\alpha_i|$ est l'amplitude d'un $i^{\text{ème}}$ échantillon de la réponse impulsionnelle de canal, amplitude de l'échantillon de la réponse impulsionnelle de canal,
dans laquelle L est la longueur de la réponse impulsionnelle de canal,
dans laquelle Δ est un paramètre,

dans laquelle Δ est dans l'intervalle suivant $\frac{1}{L} \leq \Delta \leq 1$, *where Δ is in steps of* $\frac{1}{L}$, et
dans laquelle la marge γ est de 3 dB.

2. Dispositif de test de sondage de canal (1) selon la revendication 1,
dans lequel la réponse impulsionnelle de canal h(t) est définie par :

$$h(t) = \sum_{i=1}^{L} \alpha_i(t) \cdot \delta(t - \tau_i),$$

dans laquelle $\tau_i$ est le retard du i$^{\text{ème}}$ échantillon.

3. Dispositif de test de sondage de canal (1) selon la revendication 1 ou 2,
en outre configuré pour documenter, pour toutes les mesures, le seuil de bruit effectif ainsi que les paramètres utilisés dans l'équation pour estimer ce seuil de bruit afin d'obtenir la comparabilité des paramètres à grande d'échelle obtenus.

4. Procédé pour un dispositif de test de sondage de canal (1) utilisant des modèles de canaux et des paramètres de propagation spécifiques à un scénario, qui sont vérifiés par des mesures de canaux comparables dans des environnements représentatifs,
**caractérisé en ce que**
des paramètres de mesure qui affectent l'estimation de paramètres à grande échelle sont documentés ainsi que les résultats de mesure afin d'assurer la comparabilité, dans lequel un paramètre à grande échelle est un seuil de bruit, dans lequel le seuil de bruit est défini (S50) d'après l'équation suivante :

$$NoiseThreshold_{dB} = \gamma + 20\,log_{10}\sqrt{\frac{1}{\Delta L}\sum_{i=1+(1-\Delta)L}^{L}|\alpha_i|^2},$$

dans laquelle γ est une marge,
dans laquelle $|\alpha_i|$ est l'amplitude d'un i$^{\text{ème}}$ échantillon de la réponse impulsionnelle de canal, amplitude de l'échantillon de la réponse impulsionnelle de canal,
dans laquelle L est la longueur de la réponse impulsionnelle de canal,
dans laquelle Δ est un paramètre,

dans laquelle Δ est dans l'intervalle suivant $\frac{1}{L} \leq \Delta \leq 1$, *where Δ is in steps of* $\frac{1}{L}$, et
dans laquelle la marge γ est de 3 dB.

5. Procédé selon la revendication 4,
dans lequel la réponse impulsionnelle de canal h(t) est définie par :

$$h(t) = \sum_{i=1}^{L} \alpha_i(t) \cdot \delta(t - \tau_i),$$

dans laquelle $\tau_i$ est le retard du i$^{\text{ème}}$ échantillon.

6. Procédé selon l'une quelconque des revendications 4 ou 5,
dans lequel pour toutes les mesures, le seuil de bruit effectif ainsi que les paramètres utilisés dans l'équation pour estimer ce seuil de bruit sont documentés afin d'obtenir la comparabilité des paramètres à grande d'échelle obtenus.

7. Programme informatique avec des moyens de code de programme pour exécuter les étapes suivantes sur un dispositif informatique ou un processeur de signal numérique :

utiliser des modèles de canaux, et

utiliser des paramètres de propagation spécifiques à un scénario, qui sont vérifiés par des mesures de canaux comparables dans des environnements représentatifs pour le sondage de canal,

**caractérisé en ce que**

des paramètres de mesure qui affectent l'estimation de paramètres à grande échelle sont documentés ainsi que les résultats de mesure afin d'assurer la comparabilité, dans lequel un paramètre à grande échelle est un seuil de bruit, dans lequel le seuil de bruit est défini d'après l'équation suivante :

$$NoiseThreshold_{dB} = \gamma + 20\,log_{10}\sqrt{\frac{1}{\Delta L}\sum_{i=1+(1-\Delta)L}^{L}|\alpha_i|^2},$$

dans laquelle $\gamma$ est une marge,

dans laquelle $|\alpha_i|$ est l'amplitude d'un i$^{ème}$ échantillon de la réponse impulsionnelle de canal, amplitude de l'échantillon de la réponse impulsionnelle de canal,

dans laquelle L est la longueur de la réponse impulsionnelle de canal,

dans laquelle $\Delta$ est un paramètre,

dans laquelle $\Delta$ est dans l'intervalle suivant $\frac{1}{L} \leq \Delta \leq 1,$ *where $\Delta$ is in steps of* $\frac{1}{L}$*,* et

dans laquelle la marge $\gamma$ est de 3 dB.

10

**Configuration in Use:**

| | |
|---|---|
| Center Frequency: | 5800 MHz |
| Transmitter Clock Rate: | 200 MHz |
| Receiver Sampling Rate: | 200 MHz |
| CIR Update Rate: | 409.60 µs |
| Echo Resolution: | 5 ns |
| Sequence Length: | 81919 Sa |
| Sequence Type: | FZC_16bit_160mh... |
| Measurement Type: | Triggered Segment... |

Play

**Channel Impulse Response at 0.0000 ms**

← Est. Time of Flight: 0.50 µs (149.9 m)

← Mean Excess Delay: 0.77 µs (232.0 m)
RMS Delay Spread: 0.34 µs (101.6 m)

← Maximum Excess Delay (30 dB):
3.20 µs (960.9 m)

Noise Threshold: -110 dBm

Absolute Power in dBm

Absolute Delay in µs

Path Loss:
Data Cursor:
Hide Text in Diagram:
Hold Max. Value:
Force Noise Thresh.:
X-Axis Unit: µs

# Fig. 1

20

**Fig. 2**

Fig. 3

**Fig. 4**

Define noise threshold according to the following equation

$$\mathrm{NoiseThreshold}_{dB} = \gamma + 20\log_{10}\sqrt{\frac{1}{\Delta L}\sum_{i=1+(1-\Delta)L}^{L}|\alpha_i|^2},$$

wherein $\gamma$ is a margin,

wherein $\alpha_i$ is the complex amplitude of the i-th sample, amplitude of the sample,

wherein $L_i$ is the length of a channel impulse response

and wherein $\Delta$ is a parameter.

S50

For channel sounding, use channel models and scenario specific propagation parameters, preferably the noise threshold, which are verified by comparable channel measurements in representative environments

S51

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110205911 A1


**Non-patent literature cited in the description**

- **ALEXANDER PAIER et al.** Characterization of Vehicle-to-Vehicle Radio Channels from Measurements at 5.2 GHz. *WIRELESS PERSONAL COMMUNICATIONS,* 26 June 2008, vol. 50 (1), ISSN 0929-6212, 19-32